# EUROPEAN PATENT SPECIFICATION

(11) **EP 1 712 464 B1**
(45) Date of publication and mention of the grant of the patent: **05.03.2008**
(21) Application number: 05008063.9
(22) Date of filing: 13.04.2005
(51) Int. Cl.: B62M 11/16

(54) **A coaster brake for a go-cart**
Antriebsnabe mit Bremse für Go-Kart
Moyeu d'entraînement pour kart avec un frein

(43) Date of publication of application: 18.10.2006
(73) Proprietor: SHIMANO INC., Osaka 590-8577 (JP)
(72) Inventor: Okamoto, Tatsushi, Shimonoseki-shi Yamaguchi 750-1101 (JP)
(74) Representative: Hofmann, Harald

(56) References cited:
- EP-A- 0 867 632
- DE-A1- 1 946 754
- US-A- 3 428 443
- US-A- 3 828 627
- US-A- 3 878 737
- US-A- 3 937 309
- US-A- 4 160 393
- US-A- 4 179 953
- US-A- 5 938 560
- US-A- 6 139 413
- US-A1- 2003 097 754

## Description

The present invention relates to an internal transmission with a coaster brake for a vehicle such as a go-cart (3-wheels or 4-wheel vehicle for children), and in particular to an internal transmission with a coaster brake that can go forward with 3 speeds and go backward with 1 speed as defined in the preamble of independent patent claim 1.

Hub internal transmissions have been know in the prior art for some time. For example, document US 3,937,309 discloses an internal hub including a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths. The planetary gear mechanism includes a planet gear supported by a planet gear rack for rotation around the hub axle, and a ring gear engaging the planet gear. The transmission provides three speeds depending upon the axial position of a clutch unit that is coupled to a driving member. More specifically, a high speed is provided when the clutch is linked to the gear rack such that the forward rotational power from the driver is transmitted from the planet gear attached to the gear rack to the hub body via the ring gear. A medium speed is provided when the clutch body is linked to the ring gear and the forward rotational power from the driver is transmitted from the ring gear directly to the hub body. A low speed is provided when the clutch body is linked to the ring gear and the forward rotational power from the driver is transmitted to the hub body through the ring gear, the planet gear, and the gear rack.

Such transmissions as described above usually include a coaster brake unit, wherein the reverse rotational power from the driver causes a brake cone provided on the gear rack to move in the axial direction. This movement of the brake cone in the axial direction causes a brake shoe to expand, thus producing a braking force.

Document EP0795462 discloses a hub transmission with a coaster brake unit including a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths.

A ball bearing mechanism is provided between the hub body and a brake arm that is fixed to the hub axle. When the pedal is rotated backward for braking, an engagement component that is in contact with the side surface of the depression transmits the reverse rotational power to the gear rack and actuates the roller brake. Accordingly, the braking force of the hub transmission with a coaster brake unit applied to the wheels is the same regardless of the selected transmission path.

According to those prior art documents, the hub transmission with a coaster brake unit is connected to the frame via a free wheel that does not transmit backward rotational power to the frame. Accordingly, the go-cart (3-wheels or 4-wheel vehicle) cannot go to backward.

To solve this problem, current hub transmissions with a coaster brake unit for a go-cart, further comprise a free gear fixable to the frame of the go-cart, a one way clutch between the brake cup and the free gear, wherein the one way clutch is structured for transmitting a reverse rotational force from the brake cup to the outer free gear, and a friction element fixed to the free gear or free wheeling gear, biased towards the side surface of the brake cup to provide a constant frictional force onto the braking cup. More precisely, the friction element is shaped like an "M" or "W", both ends of the friction element being fixed to the free gear, and at least two points towards the centre of the friction element biased onto the side surface of the brake cone.

A hub transmission according to the preamble of claim 1 is disclosed in document US-A-3 937 309.

It has shown, however, that in these current hub transmissions with a coaster brake unit for go-carts, when the brake shoe is expanded and contacts the inside of the hub body, a frictive, or spirant sound can be heard which is very distracting and might deviate concentration of the driver away form the road.

Accordingly, it is an object of the present invention to provide an internal hub transmission with a coaster brake for a vehicle that can forward and can go backwards without producing a high level of distracting noise.

This problem is solved by means of the features as contained in independent patent claim 1, while useful and advantageous embodiments are described by means of the features contained in the dependent claims.

Provided is a coaster brake unit for a human powered vehicle which has at least three wheels, comprising a hub body, a brake shoe, a coaster brake mechanism for causing the brake shoe to move radially outwardly and contact the inner surface of the hub body, wherein according to the invention, the roughness of the contact surface of the brake shoe is equal to or less than 0.2 micrometer, and the roughness of the contact surface of the hub body is between 1.0 to 4.0 micrometer.

In a preferred embodiment, the hub body is a hub transmission, and my comprise a hub axle, a drive member rotatably mounted around the hub axle, a hub shell rotatably mounted around the hub axle, a planetary rear mechanism coupled between the drive member and the hub shell for communicating rotational force from the drive member to the hub shell through multiple rotational paths.

Furthermore, the coaster brake unit can be further characterised in that the contact surfaces of the brake shoe and/or the hub body are grinded, wherein the contact surfaces can alternatively be barrel grinded, scoured, or whetted.

The coaster brake unit can be further characterised in that the contact surfaces are grinded by means of a practice media barrel, or more specifically a ceramics media barrel.

Further characteristics and advantages can be taken from the figures, showing a preferred embodiment of the present invention in a descriptive and non-limiting way, wherein:
- Fig. 1: is a frontal view of a particular embodiment of a brake shoe as used in an internally mounted hub transmission including a coaster brake unit;
- Fig. 2: is a partial cross sectional view of the brake shoe according to Fig. 1;
- Fig. 3: is a back view of the brake shoe according to Fig. 1 and 2; and
- Fig. 4: is a partial cross sectional view of a hub body according to the invention.

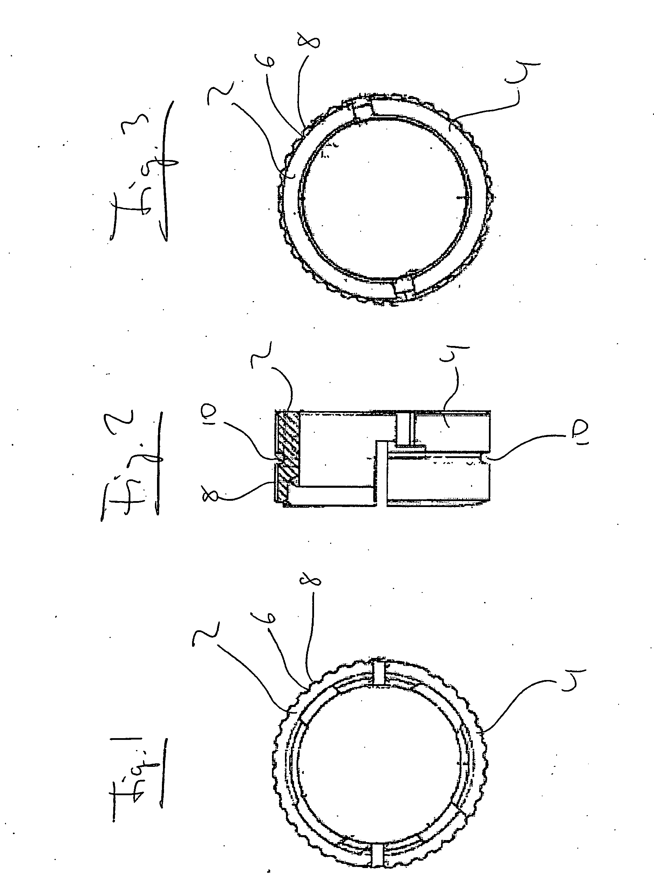

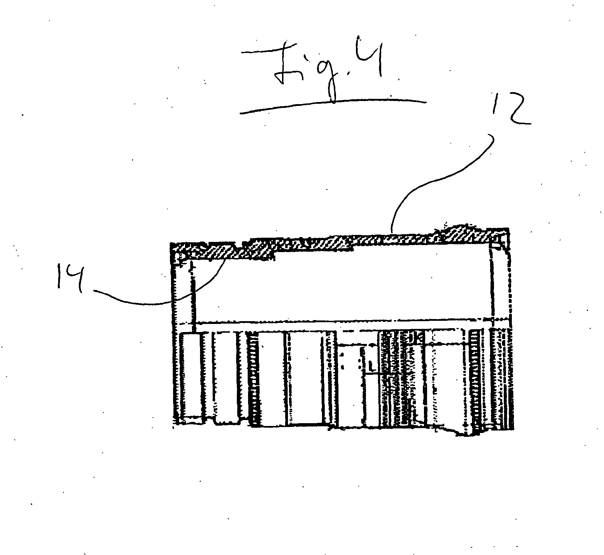

Figure 1 is a frontal view of a particular embodiment of a brake shoe as used in an internally mounted hub transmission including a coaster brake unit. The brake shoe consists of two parts 2, 4 that can be expanded to contact the inside surface of a hub body, as will be described with respect to Fig. 4. As can be seen in Fig. 1, the outer surface of the brake shoe is provided with serrations 6, equally distributed over the entire circumference of the brake shoe.

By doing so, the contact are between the outer circumference of the brake shoe and the inner surface of the hub body can be reduced, which reduces noise creation during backward rotation of the brake with no brake applied, as vibration levels in the brake can be reduced due to the reduced contact area.

The contact surface of the brake shoe, which in this embodiment is formed by outwardly directed flats 8 of the mountains between the serrations 6, have a roughness of equal or less than 0.2 micrometer. The contact surface 14 of the inside of the hub body 12 has a roughness of equal or more than 0.5 micrometer.

Furthermore, the contact surfaces of the brake shoe 2, 4 and the hub body in this embodiment are barrel grinded, scoured, and/or whetted, by a practice media barrel or a ceramics media barrel.

Fig. 2 is a partial cross sectional view of the brake shoe according to Fig. 1, where the same components and features are designated with the same reference numbers as in Fig. 1. What is the most striking feature visible in Fig. 2 is the fact that the brake shoe is provided with a circumferential notch 10, which separates the respective serrations 6 into two parts again, leading to a further fragmentation of the contact surface of the brake shoe, thus avoiding noise creation during backward rotation of the coaster brake of the internal hub transmission due to vibrations of the brake shoe.

Fig. 3 is a back view of the brake shoe according to Fig. 1 and 2. It shoes the same elements as can be taken from Fig, 1 and 2 respectively, wherein the same components and features are provided with the same reference signs as in Fig. 1 and 2.

Fig. 4 is a partial cross sectional view of a hub body 12 according to the invention. What is of particular interest in this depiction is the contact surface 14, which has a roughness of equal or more than 0.5 micrometer.

## Claims

1. A hub transmission for use in a vehicle, the hub transmission comprising a hub axle,
a drive member rotatably mounted around the hub axle,
a hub body rotatably mounted around the hub axle,
a planetary gear mechanism coupled between the drive member and the hub body for communicating rotational force from the drive member to the hub body (12) through multiple rotational paths,
a coaster brake unit having at least a brake shoe (2, 4), wherein a reverse rotational force from the drive member causes the brake shoe (2, 4) to extend and contact the inside of the hub body (12), thus producing a brake action, **characterised in that** the brake shoe (2, 4) is provided with serrations (6) parallel to the hub shaft in the outer brake shoe surface (8).

2. The hub transmission according to claim 1, **characterised in that** the roughness of the contact surface (8) of the brake shoe (2, 4) is at least 0.2 micrometer, and the roughness of the contact surface (14) of the hub body (12) is at least 0.1 micrometer.

3. The hub transmission according to claim 1 or 2, **characterised in that** the contact surfaces (8, 14) of the brake shoe (2, 4) and/or the hub body (12) are grinded.

4. The hub transmission according to claim 3, **characterised in that** the contact surfaces (8, 14) are barrel grinded.

5. The hub transmission according to claim 3 or 4, **characterised in that** the contact surfaces (8, 14) are scoured.

6. The hub transmission according to claim 3 or 4, **characterised in that** the contact surfaces (8, 14) are whetted.

7. The hub transmission according to any of claims 3 to 6, **characterised in that** the contact surfaces (8, 14) are grinded by means of a practice media barrel.

8. The hub transmission according to any of claims 3 to 6, **characterised in that** the contact surfaces (8, 14) are grinded by means of a ceramics media barrel.

## Patentansprüche

1. Nabenübertragung zur Verwendung in einem Fahrzeug, wobei die Nabenübertragung folgendes umfasst:
eine Nabenachse,
ein Antriebselement, das drehbar um die Nabenachse montiert ist,
einen Nabenkörper, der drehbar um die Nabenachse montiert ist,
einen Planetengetriebe-Mechanismus, der zwischen das Antriebselement und den Nabenkörper zum kommunizieren von Drehkraft von dem Antriebselement zu dem Nabenkörper (12) über mehrere Drehpfade gekoppelt ist,
eine Trittbremseneinheit mit zumindest einem Bremsschuh (2, 4), wobei eine Rückwärtsdrehkraft von dem Antriebselement den Bremsschuh (2, 4) veranlasst, sich zu weiten und die Innenseite des Nabenkörpers (12) zu kontaktieren, wodurch ein Bremsvorgang erzeugt wird,
**dadurch gekennzeichnet, dass**
der Bremsschuh (2, 4) mit Kerbungen (6) parallel zu der Nabenwelle in der äußeren Bremsschuhfläche (8) bereitgestellt ist.

2. Nabenübertragung gemäß Anspruch 1, **dadurch gekennzeichnet, dass** die Rauhigkeit der Kontaktfläche (8) des Bremsschuhs (2, 4) zumindest 0,2 µm ist und die Rauhigkeit der Kontaktfläche (14) des Nabenkörpers (12) zumindest 0,1 µm ist.

3. Nabenübertragung gemäß Anspruch 1 oder 2, **dadurch gekennzeichnet, dass** die Kontaktflächen (8, 14) des Bremsschuhs (2, 4) und/oder der Nabenkörper (12) geschliffen sind.

4. Nabenübertragung gemäß Anspruch 3, **dadurch gekennzeichnet, dass** die Kontaktflächen (8, 14) zylinder- bzw. trommelgeschliffen sind.

5. Nabenübertragung gemäß Anspruch 3 oder 4, **dadurch gekennzeichnet, dass** die Kontaktflächen (8, 14) gescheuert sind.

6. Nabenübertragung gemäß Anspruch 3 oder 4, **dadurch gekennzeichnet, dass** die Kontaktflächen (8, 14) gewetzt sind.

7. Nabenübertragung gemäß einem der Ansprüche 3 bis 6, **dadurch gekennzeichnet, dass** die Kontaktflächen (8, 14) geschliffen sind mittels einer gebräuchlichen Schleiftrommel.

8. Nabenübertragung gemäß einem der Ansprüche 3 bis 6, **dadurch gekennzeichnet, dass** die Kontaktflächen (8, 14) geschliffen sind mittels einer Keramik-Schleiftrommel.

## Revendications

1. Transmission de moyeu pour utilisation dans un véhicule, la transmission de moyeu comprenant
un axe de moyeu,
un organe de transmission monté rotatif autour de l'axe de moyeu,
un corps de moyeu monté rotatif autour de l'axe de moyeu,
un mécanisme de train planétaire couplé entre l'organe de transmission et le corps de moyeu, pour communiquer une force rotationnelle provenant de l'organe de transmission au corps de moyeu (12) par l'intermédiaire de chemins rotationnels multiples,
une unité de freins à contre-pédalage avec au moins un segment de frein (2, 4), une force rotationnelle inverse provenant de l'organe de transmission amenant le segment de frein (2, 4) à s'étendre et à rentrer en contact avec l'intérieur du corps de moyeu (12), produisant ainsi une action de freinage, **caractérisé en ce que** le segment de frein (2, 4) comprend des dentelures (6) parallèles à l'arbre de moyeu dans la surface externe (8) du segment de frein.

2. Transmission de moyeu selon la revendication 1, **caractérisée en ce que** la rugosité de la surface de contact (8) du segment de frein (2, 4) est d'au moins 0,2 micromètre, et la rugosité de la surface de contact (14) du corps de moyeu (12) est d'au moins 0,1 micromètre.

3. Transmission de moyeu selon la revendication 1 ou 2, **caractérisée en ce que** les surfaces de contact (8, 14) du segment de frein (2, 4) et/ou du corps de moyeu (12) sont polies.

4. Transmission de moyeu selon la revendication 3, **caractérisée en ce que** les surfaces de contact (8, 14) sont polies au tonneau.

5. Moyeu de transmission selon la revendication 3 ou 4, **caractérisé en ce que** les surfaces de contact (8, 14) sont décapées.

6. Transmission de moyeu selon la revendication 3 ou 4, **caractérisée en ce que** les surfaces de contact (8, 14) sont affutées.

7. Transmission de moyeu selon l'une quelconque des revendications 3 à 6, **caractérisée en ce que** les surfaces de contact (8, 14) sont polies à l'aide d'un tonneau contenant des médias classiques.

8. Transmission de moyeu selon l'une quelconque des revendications 3 à 6, **caractérisée en ce que** les surfaces de contact (8, 14) sont polies à l'aide d'un tonneau contenant des médias en/de céramique.
